(19) **Europäisches Patentamt**
**European Patent Office**
**Office européen des brevets**

(11) **EP 2 046 854 B1**

(12) **EUROPÄISCHE PATENTSCHRIFT**

(45) Veröffentlichungstag und Bekanntmachung des Hinweises auf die Patenterteilung:
**04.12.2019 Patentblatt 2019/49**

(51) Int Cl.:
**C08G 18/48** (2006.01)   **C08L 75/08** (2006.01)

(21) Anmeldenummer: **07730227.1**

(22) Anmeldetag: **18.06.2007**

(86) Internationale Anmeldenummer:
**PCT/EP2007/056033**

(87) Internationale Veröffentlichungsnummer:
**WO 2008/009529 (24.01.2008 Gazette 2008/04)**

(54) **POLYURETHANSCHAUMSTOFFE MIT DESINFIZIERENDER UND/ODER BLEICHENDER WIRKUNG**

POLYURETHANE FOAMS HAVING A DISINFECTING AND/OR BLEACHING EFFECT

MOUSSES DE POLYURÉTHANNE À EFFET DÉSINFECTANT ET/OU BLANCHISSANT

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.07.2006 EP 06117624**

(43) Veröffentlichungstag der Anmeldung:
**15.04.2009 Patentblatt 2009/16**

(73) Patentinhaber:
• **BASF SE**
  **67056 Ludwigshafen am Rhein (DE)**
• **Recticel N.V.**
  **1140 Brussels (BE)**

(72) Erfinder:
• **ARLT, Andreas**
  **49152 Bad Essen (DE)**

• **KLEMM, Michael**
  **49448 Lemförde (DE)**
• **FUSSNEGGER, Bernhard**
  **67489 Kirrweiler (DE)**
• **MORTELMANS, Rudi**
  **B-9140 Steendorp (BE)**
• **SPANHOVE, Peter**
  **B-9230 Wetteren (BE)**

(74) Vertreter: **BASF IP Association**
**BASF SE**
**G-FLP-C006**
**67056 Ludwigshafen (DE)**

(56) Entgegenhaltungen:
**EP-A1- 0 473 026      US-A- 4 769 013**
**US-A1- 2004 137 067**

EP 2 046 854 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft Polyurethanschaumstoffe, beispielsweise Weich-, Halbhart- oder Hartschaumstoffe, bevorzugt offenzellige Schaumstoffe, bevorzugt hydrophile Schaumstoffe, enthaltend Polymerisate aus heterocyclischen N-Vinylmonomeren (i) sowie ein desinfizierend beziehungsweise bleichend wirkendes Mittel (ii).

Die Herstellung von Polyurethanschaumstoffen, im folgenden auch als PUR-Schaumstoffe bezeichnet, durch Umsetzung von Polyisocyanaten mit Verbindungen mit mindestens zwei reaktiven Wasserstoffatomen ist seit langem bekannt und wurde vielfach beschrieben.

Die Verwendung von Wasserstoffperoxid zur Desinfektion und Bleichung ist ebenfalls bekannt. Gleichermaßen ist bekannt, dass sich Wasserstoffperoxid bei längerer Lagerung zersetzt. Zur Stabilisierung des Wasserstoffperoxids wird dieses z. B. in WO 97/20867 mit Polymerisaten aus hetrocyclischen N-Vinylmonomeren komplexiert. Die dabei hergestellten pulverförmigen Komplexe können als desinfizierend bzw. bleichend wirkendes Mittel in unterschiedlichsten Anwendungen verwendet werden.

Ebenso ist die Verwendung von Silber-, Kupfer- und Zink enthaltenden Verbindungen wie z. B. Silber-, Kupfer-, und Zinksalzen von Mineralsäuren oder anorganischen Silber-, Kupfer- und Zinkkomplexen mit z. B. Zeolithen oder Zirkoniumphosphaten zur Desinfektion und Entkeimung bekannt.

Auch die Verwendung von Polymeren, welche antimikrobielle oder desinfizierende Mittel enthalten, ist bekannt. So beschreiben beispielsweise WO 84/01102 und US 4,769,013 Polyurethane, die Polyvinylpyrrolidon kovalent gebunden enthalten. Die so hergestellten modifizierten Polyurethane werden in einem zweiten Schritt mit einem antimikrobiellen oder desinfizierenden Mittel wie beispielsweise Iod, Iodidionen, Hexachlorophen in Verbindung gebracht, wobei das desinfizierend wirkende Mittel vom Polyvinylpyrrolidon fixiert wird.

Nachteilig an diesen Verfahren ist, dass das Polyvinylpyrrolidon in einem aufwändigen Verfahren entweder durch Prepolymerisierung oder durch Tränkung und anschließender Vernetzung auf dem Polyurethan fixiert werden muss.

US 4 769 013 offenbart ein medizinisches Material umfassend einen Polyurethankomplex mit Polyvinylpyrrolidon und einem biologisch aktiven Agens, wie einem antibakteriellen Agens, komplexiert mit dem Polyvinylpyrrolidon.

EP 0473026 offenbart ein Verfahren zur Herstellung einer Zusammensetzung die einen Polyetherurethanschaum umfaßt, in dem feste Teilchen eines Komplexes von Polyvinylpyrrolidon und Iod gleichmäßig verteilt sind und die Teilchen momentan freigesetzt und in Lösung gebracht werden, wenn der Schaum mit Wasser in Kontakt gebracht wird.

Die Verwendung von silberhaltigen Polymeren als desinfizierende Wundauflagen ist bekannt. So beschreibt WO 2000/009173 die Herstellung von hydrophilen Polymeren, die Silber komplex gebunden an ein Alkylamin oder einen Aminoalkohol enthalten. Hydrophile Polymere enthaltend Silber in ionischer und komplexgebundener Form neben anderen Desinfektionsmitteln werden auch in US 2005/196431 beschrieben.

Aufgabe der vorliegenden Erfindung war es, Polymere zu entwickeln, die komplexgebundene desinfizierend bzw. bleichend wirkende Mittel enthalten, die in der Lage sind, diese zeitgesteuert wieder an das sie umgebende Medium abzugeben und so ihre desinfizierende bzw. bleichende Wirkung zu entfalten. Die Polymere sollen zudem das enthaltene desinfizierend bzw. bleichend wirkende Mittel vor seiner Verwendung gegen den allmählichen Zerfall schützen.

Die Aufgabe der vorliegenden Erfindung konnte durch Polyurethanschaumstoffe gelöst werden, die einen Komplex aus (i) und dem desinfizierend bzw. bleichend wirkenden Mittel (ii) enthalten.

Gegenstand der Erfindung sind demzufolge Polyurethanschaumstoffe, enthaltend vernetzte Polymerisate aus heterocyclischen N-Vinylmonomeren (i) sowie ein desinfizierend wirkendes bzw. bleichend wirkendes Mittel (ii) ausgewählt aus der Gruppe Wasserstoffperoxid sowie Silber-(I)-Ionen, Kupfer(II)-Ionen und Zink(II)-Ionen.

Gegenstand der Erfindung ist weiterhin ein Verfahren zur Herstellung von Polyurethanschaumstoffen, enthaltend vernetzte Polymerisate aus heterocyclischen N-Vinylmonomeren (i) sowie ein desinfizierend wirkendes bzw. bleichend wirkendes Mittel (ii) ausgewählt aus der Gruppe Wasserstoffperoxid sowie Silber-(I)-Ionen, Kupfer(II)-Ionen und Zink(II)-Ionen, umfassend die Schritte

a) Umsetzung von Polyisocyanaten mit Verbindungen mit mindestens zwei mit Isocyanatgruppen reaktiven Wasserstoffatomen in Anwesenheit Polymerisate aus heterocyclischen N-Vinylmonomeren (i),

b) Imprägnierung des Schaumstoffs mit einem desinfizierend bleichend wirkenden Mittel (ii).

Gegenstand der Erfindung ist weiterhin die Verwendung der erfindungsgemäßen Schaumstoffe im Bereich der Desinfektion, der Hygiene und der Bleichung.

Die vernetzten Polymerisate aus heterocyclischen N-Vinylmonomeren (i), die üblicherweise unlöslich sind, sind vorzugsweise ausgewählt aus der Gruppe, enthaltend Vinylpyrrolidon Homopolymere, Polyvinylpyrrolidon, modifiziertes Polyvinylpyrrolidin, Copolymere aus Vinylpyrrolidon mit Vinylimidazol, Copolymere aus Vinylpyrrolidon mit Vinylacetat, Copolymere aus Vinylpyrrolidon mit Vinylformamid.

Unlöslich im Sinne der Erfindung bedeutet, dass die Polymerisate weder in Wasser noch in üblichen organischen Lösungsmitteln löslich sind, bei einem Anteil an löslichen Anteilen von < 2 Gew.-%. Die Polymerkomponente (i) kann dabei in unterschiedlichen Korngrößen von 3 - 500 μm, d. h. auch in mikronisierter Form eingesetzt werden. Vorzugsweise ist (i) unlösliches Polyvinylpyrrolidon (PVP) und/oder unlösliche Copolymere aus Vinylpyrrolidon und Vinylimidazol. Derartige Produkte werden handelsüblich beispielsweise von der BASF Aktiengesellschaft unter den Handelsnamen Kollidon®, Luvicross®, Luvitec® , Luvicap® und Divergan® verkauft.

Der Komplex aus (i) und (ii) kann den Ausgangskomponenten der Polyurethanformulierung auch in vorgefertigter Form zugegeben werden. Da sich der vorgefertigte Komplex aus (i) und (ii) bei der Herstellung der Polyurethanschaumstoffe aufgrund der Reaktionsbedingungen zersetzen kann, werden die Polymerisate aus heterocyclischen N-Vinylmonomeren (i) bevorzugt in einem ersten Schritt bei der Herstellung des Polyurethanschaumstoffs einpolymerisiert, und in einem zweiten Schritt wird der auf diese Weise hergestellte, die Polymerisate aus heterocyclischen N-Vinylmonomeren (i) enthaltende Schaumstoff mit dem desinfizierend bzw. bleichend wirkenden Mittel (ii) in Verbindung gebracht, wobei sich ein Komplex aus (i) und (ii) auf dem Schaumstoff bildet.

Bei dieser Ausführungsform können die vernetzten und damit unlöslichen Vinylpyrrolidon-Homopolymere, und die vernetzten und damit unlöslichen Copolymere aus Vinylpyrrolidon mit Vinylimidazol als Pulver bevorzugt der Polyolkomponente in dispergierter Form zugegeben werden. Sie verhalten sich bei der Polyurethan-Reaktion inert und werden in die Schaummatrix eingelagert.

In einem nächsten Schritt können die auf diese Weise hergestellten Schaumstoffe mit dem desinfizierend bzw. bleichend wirkenden Mittel (ii) oder einer Lösung von (ii) getränkt werden. Nach dem Tränken des Schaumstoffes mit dem desinfizierend bzw. bleichend wirkenden Mittel (ii) oder einer Lösung von (ii) in einem geeigneten Lösemittel erfolgt eine Temperaturbehandlung des Schaumstoffes bei Temperaturen zwischen 0 - 80°C, bevorzugt 20 - 60 °C. Als Lösemittel eignen sich protische Lösemittel, beispielsweise Wasser, Ethanol, i-Propanol oder Methylethylketon. Durch das Trocknen kann aus den mit desinfizierend bzw. bleichend wirkenden Mittel (ii) getränkten Schaumstoffen das Lösemittel entfernt werden, wobei dies unter Anlegen von Vakuum erfolgen kann. Durch die Tränkung des Polymerisats (i) enthaltenden Schaumstoffes mit dem desinfizierend bzw. bleichend wirkenden Mittel (ii) erfolgt eine sofortige Komplexbildung des desinfizierend bzw. bleichend wirkenden Mittels (ii) mit dem Polymerisat (i). Die Komplexbildung erfolgt bereits bei Raumtemperatur, kann aber durch eine Temperaturbehandlung beschleunigt werden. Die Dauer der Umsetzung richtet sich üblicherweise nach der Größe des Ansatzes und der gewünschten Konzentration des desinfizierend bzw. bleichend wirkenden Mittel (ii) auf dem Schaumstoff und kann durch einige einfache Versuche vom Fachmann leicht ermittelt werden.

Als desinfizierend bzw. bleichend wirkende Mittel (ii), die einen Komplex mit (i) bilden können, kommen zum Einsatz Wasserstoffperoxid sowie Silber-(I)-Ionen, Kupfer(II)-Ionen und Zink(II)-Ionen, die einen stabilen Komplex mit den Polymerisaten aus heterocyclischen N-Vinylmonomeren (i) bilden können. Bevorzugt wird Wasserstoffperoxid eingesetzt. Dieses kommt üblicherweise in Form wässriger Lösungen zum Einsatz, vorzugsweise in Form von 3 bis 70 gew.-%igen, insbesondere 30 bis 60 gew.-%igen Lösungen. Die Silber-, Kupfer- und Zinkionen kommen als wässrige Lösungen von Mineralsalzen wie beispielsweise Silber(I)-nitrat, Silber(I)-sulfat, Kupfer(II)-sulfat, Kupfer(II)-nitrat, Zink(II)-nitrat und Zink(II)-sulfat zum Einsatz. Üblicherweise wird dabei die Konzentration der Metallsalzlösung auf 10 - 10.000 ppm Metallionen eingestellt.

Die erfindungsgemäßen Polyurethanschaumstoffe weisen bevorzugt einen Gehalt an (i) von 0,1 bis 100 Gew.-%, sowie einen Gehalt an (ii) von 0,1 - 50 Gew.-%, besonders bevorzugt 1 bis 40 Gew.-% und insbesondere 5 bis 30 Gew.-%, jeweils bezogen auf das Gewicht des Schaumstoffs, auf.

Die nach dem erfindungsgemäßen Verfahren hergestellten Schaumstoffe, die einen Komplex aus (i) mit (ii) enthalten, eignen sich für eine Vielzahl von Anwendungen im Bereich der Desinfektion, Hygiene oder zur Bleichung.

Die erfindungsgemäßen Schaumstoffe können beispielsweise zur Herstellung von Reinigungschwämmen mit desinfizierender und/oder bleichender Wirkung im Haushaltsbereich verwendet werden. So können beispielsweise Schwämme zur Reinigung von sanitären Anlagen, wie Toiletten, Waschbecken, Bade- und Duschwannen oder Spülbecken eingesetzt werden, wobei sich durch die Abgabe des desinfizierend bzw. bleichend wirkenden Mittels (ii) die Keimzahl der genannten Oberflächen reduzieren lässt. Ebenso sind solche Schwämme anwendbar zur Oberflächendesinfektion von Operations- und Untersuchungstischen bzw. -liegen in Arztpraxen und Krankenhäusern.

Eine weitere Anwendung der erfindungsgemäßen Schaumstoffe ist die Verwendung als Einlage, insbesondere im Bereich der adulten Inkontinenz, für Windeln, in der Monatshygiene sowie als sterile Brand- und Wundauflage. Die Anwendung der desinfizierend wirkenden Schaumstoffe ist auch zum Reinigen von Wunden, beispielsweise zur Entfernung von Schmutz aus Schürfwunden möglich. Das Einsatzgebiet beinhaltet weiterhin die desinfizierende Ausrüstung von Schuhen, Kopf- oder Nackenkissen und Matratzen.

Der Einsatz in Tamponaden, Pads oder Tupfern ist bei der Akne-Behandlung, der Versorgung im oralen Bereich wegen ihrer sowohl astringierenden als auch desinfizierenden Wirkung beispielsweise nach Extraktionen möglich. Ein weiteres Einsatzgebiet ist die Verwendung als Vaginaltamponade.

Ferner ist der Einsatz in der Haustier-Hygiene vorteilhaft. So sind z. B. Hunde- bzw. Katzenkörbe mit den erfindungsgemäßen Schaumstoffen keimtötend ausrüstbar. Ebenso bringt der Einsatz der modifizierten Schaumstoffe als Ausgangsmaterial für sogenannte Kuh- oder Pferdematratzen zur Auslegung von Ställen gegenüber den herkömmlichen Matratzen hinsichtlich verbesserter Stallhygiene und reduzierter Keimzahl Vorteile.

Ebenso eignen sich die Schaumstoffe zur Filtration von Getränken wie Mineralwässer, Fruchtsäfte, Wein oder Bier.

Sie eignen sich auch zur Anwendung in Filtersystemen zur portionsweisen Wasserentkeimung in Katastrophenfällen und Notfallsituationen.

Des Weiteren sind die modifizierten Schaumstoffe einsetzbar als Filter in der Färberei- und Textilindustrie zur Entfärbung von Prozess- und Abwässern.

Die erfindungsgemäßen Komplexe können weiterhin in Luftfiltern für Klimaanlagen und in der Reinraumtechnologie, insbesondere zur Entkeimung von Luft in Krankenhäusern und Pflegeheimen angewendet werden.

Des Weiteren sind die erfindungsgemäßen Schaumstoffe einsetzbar zum oberflächlichen Bleichen, beispielsweise in der Haarkosmetik zur Haarbleichung oder Oxidation von Farbstoffen in der Haarfärbung. Sie können ebenfalls eingesetzt werden als Schwämme zur Entfernung von Flecken aus Textilien und Leder, beispielsweise zur oberflächlichen Entfernung von Flecken von beispielsweise Obst, Tee, Rotwein und Blut aus Kleidungsstücken und Teppichböden. In einer besonderen Ausführungsform der Erfindung können die modifizierten Schaumstoffe zusätzlich ein Enzym enthalten, welches den Abbau von Körperflüssigkeiten wie Blut beschleunigt.

Die nach dem erfindungsgemäßen Verfahren hergestellten Polyurethanschaumstoffe weisen vorzugsweise eine Dichte von 10 bis 800 kg/m$^3$, besonders bevorzugt von 20 bis 700 kg/m$^3$ und insbesondere von 20 bis 50 kg/m$^3$ auf.

Die Herstellung von Polyurethanschaumstoffen durch Umsetzung von Isocyanaten, beispielsweise Polyisocyanaten, mit Verbindungen mit mindestens zwei mit Isocyanaten reaktiven Wasserstoffatomen ist allgemein bekannt.

Zur Herstellung der erfindungsgemäßen Polyurethane können die Isocyanate mit den Verbindungen mit mindestens zwei aktiven Wasserstoffatomen im Beisein der Treibmittel sowie gegebenenfalls Katalysatoren und/oder Hilfsmittel und/oder Zusatzstoffe zur Reaktion gebracht. Hierbei werden die Verbindungen mit mindestens zwei mit Isocyanatgruppen reaktiven Wasserstoffatomen sowie die genannten Treibmittel, Katalysatoren und Hilfs- und/oder Zusatzstoffe häufig vor der Umsetzung zu einer sogenannten Polyolkomponente vereinigt und diese mit der Isocyanatkomponente umgesetzt.

Zu den für die Durchführung des erfindungsgemäßen Verfahrens verwendeten Einsatzprodukten ist im Einzelnen folgendes zu sagen:

Als Isocyanate, bevorzugt Polyisocyanate, besonders bevorzugt Diisocyanate können die üblichen und bekannten (cyclo)aliphatischen und aromatischen Polyisocyanate eingesetzt werden. Beispiele für aromatische Polyisocyanate sind 2,4- und 2,6-Toluylendiisocyanat (TDI), 4,4'-, 2,4'- und 2,2'-Diphenylmethan-diisocyanat (MDI), Polyphenylen-polymethylen-polyisocyanate (Roh-MDI), 1,5-Naphthylendiisocyanat.

Beispiele für (cyclo)aliphatische Di- oder Tri-isocyanate sind Tetramethylendiisocyanat-1,4, Hexamethylendiisocyanat-1,6, Isophorondiisocyanat, 2-Methyl-pentamethylendiisocyanat, 2,2,4- oder 2,4,4-Trimethyl-1,6-hexamethylen-diisocyanat, 2-Butyl-2-ethyl-pentamethylendiisocyanat, 1,4-Diisocyanatocyclohexan, 3-Isocyanatomethyl-1-methyl-1-isocyanatocyclohexan, Isocyanatopropyl-cyclohexylisocyanat, Xylylendiisocyanat, Tetramethylxylylendiisocyanat, Bis-(4-isocyanatocyclohexyl)-methan, Lysinesterisocyanate, 1,3- oder 1,4-Bis(isocyanatomethyl)cyclohexan, 4-Isocyanatomethyl-1,8-octa-methylendiisocyanat sowie deren Mischungen oder die daraus hergestellten Oligo- oder Polyisocyanate.

Die Oligo- oder Polyisocyanate lassen sich herstellen aus den genannten Di- oder Triisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen.

Die genannten Isocyanate können auch modifiziert sein, beispielsweise durch Einbau von Carbodiimidgruppen. Häufig werden die Polyisocyanate auch in Form von Prepolymeren eingesetzt. Dabei handelt es sich um Umsetzungsprodukte der genannten Polyisocyanate mit Polyolkomponenten. Zumeist werden sogenannte Isocyanatprepolymere verwendet, das heißt solche Umsetzungsprodukte von Polyolen und Polyisocyanaten, die am Kettenende freie Isocyanatgruppen aufweisen. Die Prepolymere und Quasiprepolymere und ihre Herstellung sind allgemein bekannt und vielfach beschrieben. Für das erfindungsgemäße Verfahren werden insbesondere Prepolymere mit einem NCO-Gehalt im Bereich von 25 bis 3,5 Gew.-% eingesetzt.

In einer bevorzugten Ausführungsform des erfindungsgemäßen Verfahrens werden als Isocyanatkomponente aromatische Isocyanate, insbesondere TDI, MDI und/oder Roh-MDI eingesetzt.

Als Verbindungen mit mindestens zwei aktiven Wasserstoffatomen werden vorzugsweise Polyesteralkohole und besonders bevorzugt Polyetherole mit einer Funktionalität von 2 bis 8, insbesondere von 2 bis 4, vorzugsweise 2 bis 3 und einem Molekulargewicht im Bereich von 1000 bis 8500 g/mol, vorzugsweise 1000 bis 6000 eingesetzt. Zu den Verbindungen mit mindestens zwei aktiven Wasserstoffatomen gehören auch die Kettenverlängerungs- und Vernetzungsmittel, die gegebenenfalls mitverwendet werden können. Als Kettenverlängerungs- und Vernetzungsmittel dienen vorzugsweise 2- und 3-funktionelle Alkohole mit Molekulargewichten kleiner 1000 g/mol, insbesondere im Bereich von 60 bis 150. Beispiele sind Ethylenglykol, Propylenglykol, Diethylenglykol, Dipropylenglykol, Polyethlenglykol mit einem Molekulargewicht kleiner 1000, Polypropylenglykol mit einem Molekulargewicht kleiner 1000 und/oder Butandiol-1,4. Als Vernetzungsmittel können auch Diamine eingesetzt werden. Falls Kettenverlängerungs- und Vernetzungsmittel eingesetzt werden, beträgt deren Menge vorzugsweise bis zu 5 Gew.-%, bezogen auf das Gewicht der Verbindungen mit mindestens zwei aktiven Wasserstoffatomen.

Als Katalysatoren für die Herstellung der erfindungsgemäßen Polyurethanschaumstoffe können die üblichen und bekannten Polyurethanbildungskatalysatoren eingesetzt werden, beispielsweise organische Zinnverbindungen, wie Zinndiacetat, Zinndioctoat, Dialkylzinndilaurat, und/oder stark basische Amine wie Triethylamin, Pentamethyldiethylentriamin, Tetramethyldiaminoethylether, 1,2-Dimethylimidazol, Dimethylcyclohexylamin, Dimethylbenzylamin oder vorzugsweise Triethylendiamin. Die Katalysatoren werden vorzugsweise in einer Menge von 0,01 bis 5 Gew.-%, vorzugsweise 0,05 bis 2 Gew.-%, bezogen auf das Gewicht der Verbindungen mit mindestens zwei aktiven Wasserstoffatomen, eingesetzt.

Als Treibmittel zur Herstellung der Polyurethanschaumstoffe wird bevorzugt Wasser eingesetzt, das mit den Isocyanatgruppen unter Freisetzung von Kohlendioxid reagiert. Gemeinsam mit oder an Stelle von Wasser können auch physikalisch wirkende Treibmittel, beispielsweise Kohlenwasserstoffe, wie n-, iso- oder Cyclopentan, oder halogenierte Kohlenwasserstoffe, wie Tetrafluorethan, Pentafluorpropan, Heptafluorpropan, Pentafluorbutan, Hexafluorbutan, Dichlor-monofluorethan oder Acetale wie z. B. Methylal eingesetzt werden. Die Menge des physikalischen Treibmittels liegt dabei vorzugsweise im Bereich zwischen 1 bis 15 Gew.-%, insbesondere 1 bis 10 Gew.-%, die Menge an Wasser vorzugsweise im Bereich zwischen 0,5 bis 10 Gew.-%, insbesondere 1 bis 5 Gew.-%, jeweils bezogen auf das Gewicht der Verbindungen mit mindestens zwei aktiven Wasserstoffatomen.

Als Hilfsmittel und/oder Zusatzstoffe können beispielsweise oberflächenaktive Substanzen, Schaumstabilisatoren, Zellregler, äußere und innere Trennmittel, Füllstoffe, Pigmente, Hydrolyseschutzmittel sowie fungistatisch und bakteriostatisch wirkende Substanzen eingesetzt werden.

Die Herstellung der Polyurethanschaumstoffe erfolgt vorzugsweise nach dem oneshot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen zur Erzeugung von Schaumblöcken hergestellt werden.

Besonders vorteilhaft ist es, nach dem sogenannten Zweikomponentenverfahren zu arbeiten, bei dem, wie oben ausgeführt, eine Polyol- und eine Isocyanatkomponente hergestellt und miteinander verschäumt werden. Die Komponenten werden vorzugsweise bei einer Temperatur im Bereich zwischen 15 bis 90°C, vorzugsweise 20 bis 60 °C und besonders bevorzugt 20 bis 35°C vermischt und in das Formwerkzeug, beziehungsweise auf die Bandstraße gebracht. Die Temperatur im Formwerkzeug liegt zumeist im Bereich zwischen 20 und 110°C, vorzugsweise 30 bis 60 °C und besonders bevorzugt 35 bis 55 °C.

Die Erfindung soll n den nachfolgenden Beispielen näher erläutert werden.

Beispiele:

Beispiel 1) Herstellung eines hydrophilen Polyurethan-Weichschaumstoffes

Durch intensives Vermischen von 1000 g Polyol-Komponente mit 305 g Isocyanat-Komponente mit Hilfe eines Rührers bei einer Drehzahl von 1250 U/min und Überführen des aufschäumenden Gemisches in ein würfelförmiges Kunststoffgefäß mit 60 l Volumen wurde ein Polyurethan-Weichschaumstoff hergestellt, wobei sich die Komponenten folgendermaßen aufbauten:

Polyol-Komponente:

75 Teile eines Polyetherpolyols mit der OH-Zahl 42 mg KOH/g und einer mittleren Funktionalität von 2,66 (Lupranol VP 9349® von BASF Aktiengesellschaft)
25 Teile eines Polyetherpolyols mit der OH-Zahl 48 mg KOH/g und einer mittleren Funktionalität von 2,75 (Lupranol 2084® von BASF Aktiengesellschaft)
2,30 Teile Wasser
0,18 Teile Lupragen N 201® (BASF Aktiengesellschaft)
0,06 Teile Lupragen N 206® (BASF Aktiengesellschaft)
1,2 Teile Dabco DC 198® (Air Products)
0,06 Teile Kosmos® 29

Isocyanat-Komponente:

Toluylendiisocyanat (Lupranat® T 80 A von BASF Aktiengesellschaft)

Beispiel 2) Herstellung eines modifizierten hydrophilen Polyurethanschaumstoffes enthaltend (i)

Es wurde verfahren wie in Beispiel 1, wobei die Poylol-Komponente zusätzlich 10 Gew.-Teile eines vernetzen, wasserunlöslichen Vinylpyrrolidon-Homopolymeren mit der Bezeichnung Luvicross® (BASF Aktiengesellschaft) enthielt.
Durch intensives Vermischen von 1000 g Polyol-Komponente mit 278 g Isocyanat-Komponente mit Hilfe eines Rührers bei einer Drehzahl von 1250 U/min und Überführen des aufschäumenden Gemisches in ein würfelförmiges Kunststoffgefäß mit 60 l Volumen wurde ein Polyurethan-Weichschaumstoff hergestellt, wobei sich die Komponenten folgendermaßen aufbauten:

Polyol-Komponente:

75 Teile eines Polyetherpolyols mit der OH-Zahl 42 mg KOH/g und einer mittleren Funktionalität von 2,66 (Lupranol VP 9349® von BASF Aktiengesellschaft)
25 Teile eines Polyetherpolyols mit der OH-Zahl 48 mg KOH/g und einer mittleren Funktionalität von 2,75 (Lupranol 2084® von BASF Aktiengesellschaft)
2,30 Teile Wasser
0,18 Teile Lupragen N 201® (BASF Aktiengesellschaft)
0,06 Teile Lupragen N 206® (BASF Aktiengesellschaft)
1,2 Teile Dabco DC 198® (Air Products)
0,06 Teile Kosmos® 29
10 Teile eines vernetzten und damit unlöslichen Polyvinylpyrrolidons (Luvicross® von BASF Aktiengesellschaft)

Isocyanat-Komponente:

Toluylendiisocyanat (Lupranat® T 80 A von BASF Aktiengesellschaft)

Beispiel 3) Herstellung eines modifizierten hydrophilen Polyurethanschaumstoffes enthaltend (i)

Es wurde verfahren wie in Beispiel 1, wobei die Poylol-Komponente zusätzlich 1 Gew.-Teil eines vernetzen, wasserunlöslichen Copolymeren aus Vinylimidazol und Vinylpyrrolidon mit der Bezeichnung Divergan® HM (BASF Aktiengesellschaft) enthielt.
Durch intensives Vermischen von 1000 g Polyol-Komponente mit 278 g Isocyanat-Komponente mit Hilfe eines Rührers bei einer Drehzahl von 1250 U/min und Überführen des aufschäumenden Gemisches in ein würfelförmiges Kunststoffgefäß mit 60 l Volumen wurde ein Polyurethan-Weichschaumstoff hergestellt, wobei sich die Komponenten folgendermaßen aufbauten:

Polyol-Komponente:

75 Teile eines Polyetherpolyols mit der OH-Zahl 42 mg KOH/g und einer mittleren Funktionalität von 2,66 (Lupranol VP 9349® von BASF Aktiengesellschaft)
25 Teile eines Polyetherpolyols mit der OH-Zahl 48 mg KOH/g und einer mittleren Funktionalität von 2,75 (Lupranol 2084® von BASF Aktiengesellschaft)
2,30 Teile Wasser
0,18 Teile Lupragen N 201® (BASF Aktiengesellschaft)
0,06 Teile Lupragen N 206® (BASF Aktiengesellschaft)
1,2 Teile Dabco DC 198® (Air Products)
0,06 Teile Kosmos® 29
10 Teile eines vernetzten und damit ünlöslichen Copolymers aus Vinylpyrrolidon und Vinylimidazol (Divergan HM® von BASF Aktiengesellschaft)

Isocyanat-Komponente:

Toluylendiisocyanat (Lupranat® T 80 A von BASF Aktiengesellschaft)

Beispiel 4) Herstellung von erfindungsgemäßen hydrophilen Polyurethanschaumstoffen enthaltend (ii), komplex gebunden an (i)

Die in den Beispielen 2 und 3 erhaltenen Schäume werden bei Raumtemperatur 1 Stunde mit einer wässrigen 30%igen Wasserstoffperoxidlösung getränkt. Hierzu werden pro g Schaumstoff 30 g Wasserstoffperoxidlösung in ein Gefäß gegeben und der Schaumstoff gelegentlich mit einem Stempel ausgepresst. Anschließend wird der Schaum 4 h bei 60 °C getrocknet. Die fixierten Massen an Wasserstoffperoxid ($H_2O_2$) wurden anschließend gravimetrisch bestimmt. Sie sind Tabelle 1 zu entnehmen. Zum Vergleich wurde die Referenzprobe aus Beispiel 1 ohne Zusatz von (i) auf gleiche Weise mitbehandelt.

In Tabelle 1 sind die fixierten Massen an Wasserstoffperoxid auf den unterschiedlichen Schaumstoffen dargestellt.

Tabelle 1: fixierte Massen an Wasserstoffperoxid auf den unterschiedlichen Schaumstoffen

| Schaum aus | Beispiel 2 | Beispiel 3 | Beispiel 1 |
|---|---|---|---|
| Polymer (i) | Luvicross | Divergan HM | |
| Masse Schaum | 10,23 g | 10,23 g | 9,86 g |
| Masse Schaum nach Tränkung | 28,58 g | 29,31 g | 25,74 g |
| Masse Schaum nach Trocknung | 13,96 g | 13,27 g | 10,25 g |
| Masse fixiertes $H_2O_2$ | 3,73 g | 3,04 g | 0,39 g |
| Masse fixiertes $H_2O_2$ pro 1 g Schaum | 0,36 g | 0,30 g | 0,04 g |

Beispiel 5) Prüfung der Abgabe des komplex gebundenen Wasserstoffperoxid in wässriger Umgebung.

Zur Bestimmung der auswaschbaren Menge an Wasserstoffperoxid wird nun eine Kaskade von 5 Spülgefäßen mit jeweils 400 ml Wasser verwendet. Der Schaum wird nacheinander für jeweils 10 s in die Gefäße gegeben und während dieser Zeit mehrfach ausgepresst. Von der Waschlösung werden anschließend 25 ml bzw. 50 ml abpipettiert, mit 5 ml konzentrierter Schwefelsäure versetzt und mittels Kaliumpermanganatmaßlösung der Gehalt an Wasserstoffperoxid titrimetrisch bestimmt. Es werden 2 Maßlösungen mit den Konzentrationen $c(KMn_4)$ = 0,01 mol/L und $c(KMn_4)$ = 2 mmol/L verwendet. Der Titer der Maßlösungen wird analog der $H_2O_2$-Bestimmung mit Natriumoxalat ermittelt. Die Massenkonzentration an Wasserstoffperoxid wurde nach folgender Formel berechnet.

$$\beta(H_2O_2) = \frac{5*1000\ mg}{2*1\ g} * \frac{V(KMnO_4)*c(KMnO_4)*t(KMnO_4)*M(H_2O_2)}{V(\mathrm{Pr}obe)}$$

$\beta(H_2O_2)$ : Massenkonzentration an $H_2O_2$ [mg/L]  
$V(KMnO_4)$ : Verbrauch an Kaliumpermanganatmaßlösung [L]  
$c(KMnO_4)$ : Konzentration der Kaliumpermanganatmaßlösung [mol/L]  
$t(KMnO_4)$ : Titer der Kaliumpermanganatmaßlösung  
$M(H_2O_2)$ : Molare Masse von Wasserstoffperoxid [g/mol]  
$V(Probe)$ : Teilvolumen der Waschlösung

In Tabelle 2 sind die abgegebenen Mengen an Wasserstoffperoxid aus dem Schaumstoff aus Beispiel 2 dargestellt.

Tabelle 2: Abgegebene Menge an Wasserstoffperoxid aus dem Schaumstoff aus Beispiel 2 in wässriger Umgebung

| In Tabelle 3 sind die abgegebenen Mengen an Wasserstoffperoxid aus dem Schaum | | | | | | |
|---|---|---|---|---|---|---|
| Spülgefäß | V(Probe) | V(KMnO₄) | c(KMnO₄) | t(KMnO₄) | m(H₂O₂) | β(H₂O₂) |
| 1 | 25,00 mL | 13,40 mL | 0,010 mol/L | 1,021 | 11,634 mg | |
| | 25,00 mL | 13,40 mL | 0,010 mol/L | 1,021 | 11,634 mg | 465,4 mg/L |
| 2 | 25,00 mL | 4,30 mL | 0,002 mol/L | 0,988 | 0,723 mg | |
| | 25,00 mL | 4,30 mL | 0,002 mol/L | 0,988 | 0,723 mg | 28,9 mg/L |

(fortgesetzt)

| Spülgefäß | V(Probe) | V(KMnO$_4$) | c(KMnO$_4$) | t(KMnO$_4$) | m(H$_2$O$_2$) | β(H$_2$O$_2$) |
|---|---|---|---|---|---|---|
| 3 | 25,00 mL | 0,60 mL | 0,002 mol/L | 0,988 | 0,101 mg | |
| | 25,00 mL | 0,60 mL | 0,002 mol/L | 0,988 | 0,101 mg | 4,0 mg/L |

aus Beispiel 3 dargestellt.

Tabelle 3: Abgegebene Menge an Wasserstoffperoxid aus dem Schaumstoff aus Beispiel 3 in wässriger Umgebung

| Spülgefäß | V(Probe) | V(KMnO$_4$) | c(KMnO$_4$) | t(KMnO$_4$) | m(H$_2$O$_2$) | β(H$_2$O$_2$) |
|---|---|---|---|---|---|---|
| 1 | 25,00 mL | 10,25 mL | 0,010 mol/L | 1,021 | 8,899 mg | |
| | 25,00 mL | 10,30 mL | 0,010 mol/L | 1,021 | 8,943 mg | 356,8 mg/L |
| 2 | 25,00 mL | 5,10 mL | 0,002 mol/L | 0,988 | 0,857 mg | |
| | 25,00 mL | 5,00 mL | 0,002 mol/L | 0,988 | 0,840 mg | 33,9 mg/L |
| 3 | 25,00 mL | 0,70 mL | 0,002 mol/L | 0,988 | 0,118 mg | |
| | 25,00 mL | 0,70 mL | 0,002 mol/L | 0,988 | 0,118 mg | 4,7 mg/L |
| 4 | 50,00 mL | 0,50 mL | 0,002 mol/L | 0,988 | 0,084 mg | |
| | 50,00 mL | 0,50 mL | 0,002 mol/L | 0,988 | 0,084 mg | 1,7 mg/L |

In Tabelle 4 sind die daraus berechneten freigesetzten Absolutmengen an Wasserstoffperoxid in mg bezogen auf 1 g Schaum dargestellt.

| Schaum aus | Beispiel 2 | | Beispiel 3 | |
|---|---|---|---|---|
| Spülgefäßnr. | β(H$_2$O$_2$) [mg/L] | m(H$_2$O$_2$) [mg] | β(H$_2$O$_2$) [mg/L] | m(H$_2$O$_2$) [mg] |
| 1 | 465 | 186,000 | 357 | 142,800 |
| 2 | 29 | 11,600 | 34 | 13,600 |
| 3 | 4 | 1,600 | 5 | 2,000 |
| 4 | 1 | 0,400 | 2 | 0,800 |
| 5 | <1 | 0,000 | <1 | 0,000 |

**Patentansprüche**

1. Polyurethanschaumstoffe, enthaltend vernetzte Polymerisate aus heterocyclischen N-Vinyl-monomeren (i) sowie ein desinfizierend wirkendes bzw. bleichend wirkendes Mittel (ii), ausgewählt aus der Gruppe Wasserstoffperoxid sowie Silber-(I)-Ionen, Kupfer(II)-Ionen und Zink(II)-Ionen.

2. Polyurethanschaumstoffe nach Anspruch 1, durch gekennzeichnet, dass die Polymerisate (i) ausgewählt sind aus der Gruppe, enthaltend Vinylpyrrolidon Homopolymere, Polyvinylpyrrolidon, modifiziertes Polyvinylpyrrolidin, Copolymere aus Vinylpyrrolidon mit Vinylimidazol, Copolymere aus Vinylpyrrolidon mit Vinylacetat, Copolymere aus Vinylpyrrolidon mit Vinylformamid.

3. Polyurethanschaumstoffe nach Anspruch 1, durch gekennzeichnet, dass die Polymerisate (i) vernetztes Polypyrrolidon und/oder vernetztes Copolymerisat aus Vinylpyrrolidon und Vinylimidazol sind.

4. Polyurethanschaumstoffe nach Anspruch 1, **dadurch gekennzeichnet, dass** die Polymerisate aus heterocyclischen N-Vinylmonomeren (i) in einer Menge von 0,1 bis 100 Gew.-%, bezogen auf das Gewicht des Schaumstoffs, eingesetzt werden.

5. Polyurethanschaumstoffe nach Anspruch 1, **dadurch gekennzeichnet, dass** das desinfizierend bzw. bleichend wirkenden Mittel (ii) Wasserstoffperoxid ist.

**6.** Polyurethanschaumstoffe nach Anspruch 1, **dadurch gekennzeichnet, dass** die desinfizierend bzw. bleichend wirkenden Mittel(ii) in einer Menge von 0,1 - 50 Gew.-%, bezogen auf das Gewicht des Schaumstoffs, eingesetzt werden.

**7.** Polyurethanschaumstoffe nach Anspruch 1, **dadurch gekennzeichnet, dass** die desinfizierend bzw. bleichend wirkenden Mittel (ii) in einer Menge von 1 bis 40 Gew.-%, bezogen auf das Gewicht des Schaumstoffs, eingesetzt werden.

**8.** Polyurethanschaumstoffe nach Anspruch 1, **dadurch gekennzeichnet, dass** die desinfizierend bzw. bleichend wirkenden Mittel(ii) in einer Menge von 10 bis 30 Gew.-%, bezogen auf das Gewicht des Schaumstoffs, eingesetzt werden.

**9.** Verfahren zur Herstellung von Polyurethanschaumstoffen, enthaltend vernetzte Polymerisate aus heterocyclischen N-Vinylmonomeren (i) sowie ein desinfizierend wirkendes bzw. bleichend wirkendes Mittel (ii), ausgewählt aus der Gruppe Wasserstoffperoxid sowie Silber-(I)-Ionen, Kupfer(II)-Ionen und Zink(II)-Ionen umfassend die Schritte

a) Umsetzung von Polyisocyanaten mit Verbindungen mit mindestens zwei mit Isocyanatgruppen reaktiven Wasserstoffatomen in Anwesenheit Polymerisate aus heterocyclischen N-Vinylmonomeren (i),
b) Imprägnierung des Schaumstoffs mit einem desinfizierend bleichend wirkenden Mittel (ii).

**10.** Verwendung von Polyurethanschaumstoffen nach Anspruch 1 im Bereich der Desinfektion, der Hygiene und der Bleichung.

**Claims**

**1.** A polyurethane foam comprising crosslinked polymers of heterocyclic N-vinyl monomers (i) and a disinfectant and/or bleaching agent (ii), chosen from the group hydrogen peroxide and silver (I) ions, copper (II) ions and zinc (II) ions.

**2.** The polyurethane foam according to claim 1, wherein the polymers (i) are chosen from the group comprising vinylpyrrolidone homopolymers, polyvinylpyrrolidone, modified polyvinylpyrrolidine, copolymers of vinylpyrrolidone with vinylimidazole, copolymers of vinylpyrrolidone with vinyl acetate, copolymers of vinylpyrrolidone with vinylformamide.

**3.** The polyurethane foam according to claim 1, wherein the polymers (i) are crosslinked polypyrrolidone and/or crosslinked copolymer of vinylpyrrolidone and vinylimidazole.

**4.** The polyurethane foam according to claim 1, wherein the polymers of heterocyclic N-vinyl monomers (i) are used in an amount of from 0.1 to 100% by weight, based on the weight of the foam.

**5.** The polyurethane foam according to claim 1, wherein the disinfectant and/or bleaching agent (ii) is hydrogen peroxide.

**6.** The polyurethane foam according to claim 1, wherein the disinfectant and/or bleaching agents (ii) are used in an amount of 0.1-50% by weight, based on the weight of the foam.

**7.** The polyurethane foam according to claim 1, wherein the disinfectant and/or bleaching agents (ii) are used in an amount of from 1 to 40% by weight, based on the weight of the foam.

**8.** The polyurethane foam according to claim 1, wherein the disinfectant and/or bleaching agents (ii) are used in an amount of from 10 to 30% by weight, based on the weight of the foam.

**9.** A method of producing polyurethane foams comprising crosslinked polymers of heterocyclic N-vinyl monomers (i) and a disinfectant and/or bleaching agent (ii), chosen from the group hydrogen peroxide and silver(I) ions, copper(II) ions and zinc(II) ions comprising the steps

a) reaction of polyisocyanates with compounds having at least two hydrogen atoms reactive with isocyanate groups in the presence of polymers of heterocyclic N-vinyl monomers (i),
b) impregnation of the foam with a disinfectant bleaching agent (ii).

**10.** The use of polyurethane foams according to claim 1 in the field of disinfection, hygiene and bleaching.

**Revendications**

**1.** Mousses de polyuréthane, contenant des polymères réticulés de monomères de N-vinyle hétérocycliques (i), ainsi qu'un agent à activité désinfectante ou à activité blanchissante (ii), choisi dans le groupe constitué par le peroxyde d'hydrogène, ainsi que les ions argent (I), les ions cuivre (II) et les ions zinc (II) .

**2.** Mousses de polyuréthane selon la revendication 1, **caractérisées en ce que** les polymères (i) sont choisis dans le groupe contenant les homopolymères de vinylpyrrolidone, la polyvinylpyrrolidone, la polyvinylpyrrolidine modifiée, les copolymères de vinylpyrrolidone avec du vinylimidazole, les copolymères de vinylpyrrolidone avec de l'acétate de vinyle, les copolymères de vinylpyrrolidone avec du vinylformamide.

**3.** Mousses de polyuréthane selon la revendication 1, **caractérisées en ce que** les polymères (i) sont de la polypyrrolidone réticulée et/ou un copolymère réticulé de vinylpyrrolidone et de vinylimidazole.

**4.** Mousses de polyuréthane selon la revendication 1, **caractérisées en ce que** les polymères de monomères de N-vinyle hétérocycliques (i) sont utilisés en une quantité de 0,1 à 100 % en poids, par rapport au poids de la mousse.

**5.** Mousses de polyuréthane selon la revendication 1, **caractérisées en ce que** l'agent à activité désinfectante ou blanchissante (ii) est le peroxyde d'hydrogène.

**6.** Mousses de polyuréthane selon la revendication 1, **caractérisées en ce que** les agents à activité désinfectante ou blanchissante (ii) sont utilisés en une quantité de 0,1 à 50 % en poids, par rapport au poids de la mousse.

**7.** Mousses de polyuréthane selon la revendication 1, **caractérisées en ce que** les agents à activité désinfectante ou blanchissante (ii) sont utilisés en une quantité de **1** à 40 % en poids, par rapport au poids de la mousse.

**8.** Mousses de polyuréthane selon la revendication 1, **caractérisées en ce que** les agents à activité désinfectante ou blanchissante (ii) sont utilisés en une quantité de 10 à 30 % en poids, par rapport au poids de la mousse.

**9.** Procédé de fabrication de mousses de polyuréthane, contenant des polymères réticulés de monomères de N-vinyle hétérocycliques (i), ainsi qu'un agent à activité désinfectante ou à activité blanchissante (ii), choisi dans le groupe constitué par le peroxyde d'hydrogène, ainsi que les ions argent (I), les ions cuivre (II) et les ions zinc (II), comprenant les étapes suivantes :

a) la mise en réaction de polyisocyanates avec des composés contenant au moins deux atomes d'hydrogène réactifs avec les groupes isocyanate en présence de polymères de monomères de N-vinyle hétérocycliques (i),
b) l'imprégnation de la mousse avec un agent à activité désinfectante blanchissante (ii).

**10.** Utilisation de mousses de polyuréthane selon la revendication 1 dans le domaine de la désinfection, de l'hygiène et du blanchissement.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9720867 A
- WO 8401102 A
- US 4769013 A
- EP 0473026 A
- WO 2000009173 A
- US 2005196431 A